# EUROPÄISCHE PATENTSCHRIFT

(11) **EP 1 626 609 B1**
(45) Veröffentlichungstag und Bekanntmachung des Hinweises auf die Patenterteilung: **22.04.2009**
(21) Anmeldenummer: 05106051.5
(22) Anmeldetag: 04.07.2005
(51) Int. Cl.: H04Q 9/00, G08C 19/02

(54) **Verfahren und Vorrichtung zum Ermitteln eines Zustands einer Gebereinrichtung**
Method and apparatus for determining a state of a sensor
Procédé et dispositif pour déterminer un état d'un capteur

(30) Priorität: 06.07.2004 DE 102004032681
(43) Veröffentlichungstag der Anmeldung: 15.02.2006
(73) Patentinhaber: SIEMENS AKTIENGESELLSCHAFT, 80333 München (DE)
(72) Erfinder: Zirkl, Siegmar, 93051 Regensburg (DE)

(56) Entgegenhaltungen:
- EP-A- 1 391 735
- EP-A- 1 491 864
- DE-A1- 1 811 930
- DE-A1- 4 221 916

## Beschreibung

Die vorliegende Erfindung betrifft ein Verfahren zum Ermitteln eines Zustands einer Gebereinrichtung eines Installationssystems am proximalen Ende einer elektrischen Leitung, wobei die Gebereinrichtung am distalen Ende der elektrischen Leitung angeordnet ist. Darüber hinaus betrifft die vorliegende Erfindung eine entsprechende Vorrichtung zum Ermitteln eines Zustands einer Gebereinrichtung.

In der Installationstechnik hält mehr und mehr die Elektronik Einzug, um die Bedienung komfortabler zu gestalten. So finden sich auf dem Markt so genannte Binäreingänge als Einfach- oder Mehrfachgeräte für mehrere Kanäle an deren Eingänge Kontakte über relativ lange Leitungen (100 m und mehr) angeschlossen werden können, deren Zustände - offen oder geschlossen - abgefragt werden können und verschiedene Funktionen auslösen. Derartige Binäreingänge können autarke Geräte sein, oder es sind Busgeräte (z. B. EIB). Im Falle von Busgeräten werden diese ggf. vom Bus aus versorgt. In diesem Fall ist es zwingend, die Kontakte mit möglichst geringer Energie abzufragen, andererseits sollten die Spitzenwerte von Spannung und Stromimpuls möglichst hoch sein, um die Langzeit-Funktionstüchtigkeit von 230 V-Installationstastern bzw. Schaltern sicherzustellen. Beim Betrieb von 230 V-Installations-Tastern mit niedrigen Spannungen von einigen Volt und Strömen im mA-Bereich entstehen nämlich durch Oxydationen und Verschmutzungen nach und nach Kontaktierungsprobleme. Relativ hohe Spannungen im Einschaltmoment mit nachfolgenden relativ hohen Impulsströmen können diese Schichten jedoch wieder wegbrennen.

Gegen parasitäre elektrische Einkopplungen aller Art in die langen Leitungen muss eine hohe Störsicherheit gewährleistet werden. Ebenso darf die als Antenne wirkende Leitung nicht zu hohe Störpegel aussenden. Die Höhe der so genannten Funkstörspannung auf der Leitung ist in den entsprechenden Produktnormen angegeben (für EIB-Geräte gilt z. B. die EN50090-2-2. Das Messverfahren ist in der EN55022 beschrieben).

Bei Mehrfach-Binäreingängen ist es oftmals erwünscht Potentialtrennung zwischen den einzelnen Eingängen bereitzustellen, um Verkopplungen aller Art zu verhindern (z. B. Erdschleifen). Selbstverständlich sollte auch eine Potentialtrennung zum ggf. angeschlossenen Bus bestehen. Zusätzlich ist es von Vorteil eine Potentialtrennung zum 230 V-Netz (doppelte Isolation) zu realisieren, da dann die lange Leitung mit angeschlossenem Kontakt als SELV (safety extra low voltage) deklariert werden kann, und damit keine besonderen Anforderungen an die Isolation stellt, wie es sonst bei 230 V-Spannung der Fall wäre.

Alle diese Anforderungen führen auf einen Kompromiss hinaus, der nach heutigem Stand der Technik mehr oder minder gut gelöst ist.

Als einfachste Lösung ist eine Abfrage des Kontakts mit Gleichstrom bekannt. Aufgrund der zumeist nur begrenzt zur Verfügung stehenden Leistung (z.B. bei Versorgung von einem Bussystem) muss der Abfragestrom sehr gering gehalten werden. Dadurch ist der Eingang sehr störanfällig gegen Einkopplungen in die angeschlossenen Leitungen. In der Regel ist daher die Leitungslänge begrenzt. Bei Mehrfach-Binäreingängen (mehrere Eingänge pro Gerät) ist eine Potentialtrennung zwischen den Kanälen aufwändig, da für jeden Eingang eine eigene potentialgetrennte Gleichspannung zur Verfügung gestellt werden muss. Beispiele für diese Technik ohne Potentialtrennung finden sich bei Fa. Lingg & Janke (EIB-Binäreingang BE9FK) und Fa. ABB (EIB-Binäreingang ET/S 6.24.5).

Alternativ erfolgt die Abfrage von Meldekontakten mit Impulsen. Eine direkte Ausgabe von relativ schmalen Impulsen (einige µs) in repetitiver Abfolge (einige ms) auf die angeschlossene Leitung ist möglich. Hierbei wird mittels Messung des Puls-Stromflusses der Zustand des Kontaktes erkannt. Nachteilig dabei ist jedoch, dass aufwändigere Entstörmaßnahmen für die "offene" Leitung nötig sind (Funkstörspannungen). Entsprechend einer besseren Methode werden bei offenem Kontakt mittels der Impulse ein Kondensator sowie auch die parallelgesetzte Leitungskapazität aufgeladen. Dadurch ist eine geringe Störaussendung bei offenem Kontakt erreichbar. Bei geschlossenem Kontakt entstehen Impulsströme über den Kontakt, mittels denen der Zustand "geschlossen" erkannt wird. Die Störaussendung ist in diesem Fall höher, so dass weitere Maßnahmen nötig sind. Aus diesem Grund sowie wegen Energieersparnis wird der Pulsstromfluss durch den Kontakt gering gehalten. Beispiele mit dieser Technik finden sich bei der Fa. Merten (Binäreingang REG-K/8x10) sowie in dem Dokument EP 0 756 773 B1 der Anmelderin.

Eine weitere Alternative zur Bestimmung des Schaltzustandes einer Gebereinrichtung ist aus DE-A-4221916 bekannt.

Die Aufgabe der vorliegenden Erfindung besteht somit darin, ein Verfahren und eine Vorrichtung zum Abfragen einer Gebereinrichtung vorzuschlagen, bei denen mit niedriger Energie gearbeitet werden kann und darüber hinaus hohe Störsicherheit gegeben sowie eine Potentialtrennung möglich ist.

Erfindungsgemäß wird diese Aufgabe gelöst durch ein Verfahren zum Ermitteln eines Zustands einer Gebereinrichtung eines Installationssystems am proximalen Ende einer elektrischen Leitung, wobei die Gebereinrichtung am distalen Ende der elektrischen Leitung angeordnet ist, durch Dämpfen eines elektrischen Schwingkreises durch die Gebereinrichtung am proximalen Ende der Leitung und Gewinnen des Zustands der Gebereinrichtung aus dem Maß der Dämpfung.

Darüber hinaus ist entsprechend der vorliegenden Erfindung vorgesehen eine Vorrichtung zum Ermitteln eines Zustands einer Gebereinrichtung eines Installationssystems am proximalen Ende einer elektrischen Leitung, wobei die Gebereinrichtung am distalen Ende der elektrischen Leitung angeordnet ist, mit einem elektrischen Schwingkreis, der an das proximale Ende der Leitung angeschlossen ist und dadurch von der Gebereinrichtung dämpfbar ist, und einer Auswerteeinrichtung zum Auswerten eines Schwingungssignals des Schwingkreises und zum Gewinnen des Zustands der Gebereinrichtung aus dem Maß der Dämpfung.

In vorteilhafter Weise ermöglicht das erfindungsgemäße Verfahren bzw. die erfindungsgemäße Vorrichtung ein Abfragen von Meldekontakten über große Leitungslängen von beispielsweise 1000 m.

Vorzugsweise wird der Schwingkreis durch externe Impulse angeregt. Speziell kann er durch einen Puls bzw. eine Impulsfolge angeregt und derart bedämpft werden, dass die Schwingungsamplitude zwischen zwei Impulsen deutlich abnimmt. Dadurch lässt sich die Anzahl der Schwingungsperioden zwischen zwei Impulsen genau festlegen. Mit einer weiteren Dämpfung des Schwingkreises, die mit einer Änderung des Zustands der Gebereinrichtung korreliert, kann die Anzahl der Schwingungsperioden innerhalb zweier Impulse verändert werden.

Die Eigenresonanz bzw. die Betriebsfrequenz des Schwingkreises sollte mindestens 15 kHz betragen. Falls nämlich vom Schwingkreis akustische Schwingungen angeregt werden, liegen diese dann oberhalb der Hörschwelle.

Wie bereits angedeutet, kann zum Gewinnen des Zustands der Gebereinrichtung eine Periodenanzahl abklingender Schwingungen des Schwingkreises gezählt werden. Hierdurch ergibt sich eine sehr einfache und zuverlässige Art, den Geberzustand zu bestimmen.

Bei einer besonderen Ausgestaltung kann der Schwingkreis über einen Transistor angeregt werden und der Strom durch den Transistor für das Gewinnen des Zustands der Gebereinrichtung herangezogen werden. Diese Art der Auswertung ist als Alternative zu dem Zählen einer Periodenanzahl abklingender Schwingungen zu sehen.

Vorteilhafterweise wird die Amplitude der Schwingung anhand einer Spannungsschwelle durch einen Transistor, einen Operationsverstärker oder einen Schmitt-Trigger ausgewertet. Somit ist eine verhältnismäßig einfache Auswertung realisierbar.

Die Gebereinrichtung kann einen Schalter, einen Taster oder einen Sensor umfassen. Dies bedeutet, dass die erfindungsgemäße Zustandsermittlung nicht nur für Bauelemente mit binären Schaltzuständen, sondern auch für Sensoren, die verschiedene physikalische Größen in Widerstandswerte umwandeln, eingesetzt werden kann. Dabei kann das Maß der Dämpfung mehrere Werte annehmen, die entsprechenden Detektionswerten zuzuordnen sind.

Der Schwingkreis und die Auswerteeinrichtung können mit der gleichen Versorgungsspannung betrieben werden. Hinsichtlich der Langzeit-Funktionstüchtigkeit ist es jedoch von Vorteil, wenn der Schwingkreis mit höherer Spannung betrieben wird und lediglich die Auswertung mit niedriger Spannung.

Bei einer besonders vorteilhaften Ausführungsform ist am proximalen Ende der Leitung eine Sekundärspule eines Transformators angeschlossen und die Primärspule bildet die Induktivität des Schwingkreises. Durch den Transformator lässt sich auf zuverlässige Weise eine Potentialtrennung zwischen Schwingkreis und Gebereinrichtung gewährleisten. Ist diese Potentialtrennung nicht gewünscht, so kann statt dem Transformator auch nur eine Induktivität eingesetzt werden.

An dem proximalen Ende der Leitung kann ferner ein Kaltleiter angeschlossen sein. Dieser schützt in vorteilhafter Weise beispielsweise den Transformator vor Fehlanschlüssen, z. B. einen Fehlanschluss an eine 230 V-Netzspannung.

Die vorliegende Erfindung wird nun anhand der beigefügten Zeichnungen näher erläutert, in denen zeigen:
- FIG 1: ein Schaltbild einer erfindungsgemäßen Auswertevorrichtung;
- FIG 2: ein Oszillogramm der Schwingkreisspannung bei offener Taste;
- FIG 3: ein Oszillogramm bei geschlossener Taste;
- FIG 4: einen vergrößerten Ausschnitt des Oszillogramms von FIG 2; und
- FIG 5: einen vergrößerten Abschnitt des Oszillogramms von FIG 3.

Die nachfolgend näher geschilderten Ausführungsbeispiele stellen bevorzugte Ausführungsformen der vorliegenden Erfindung dar.

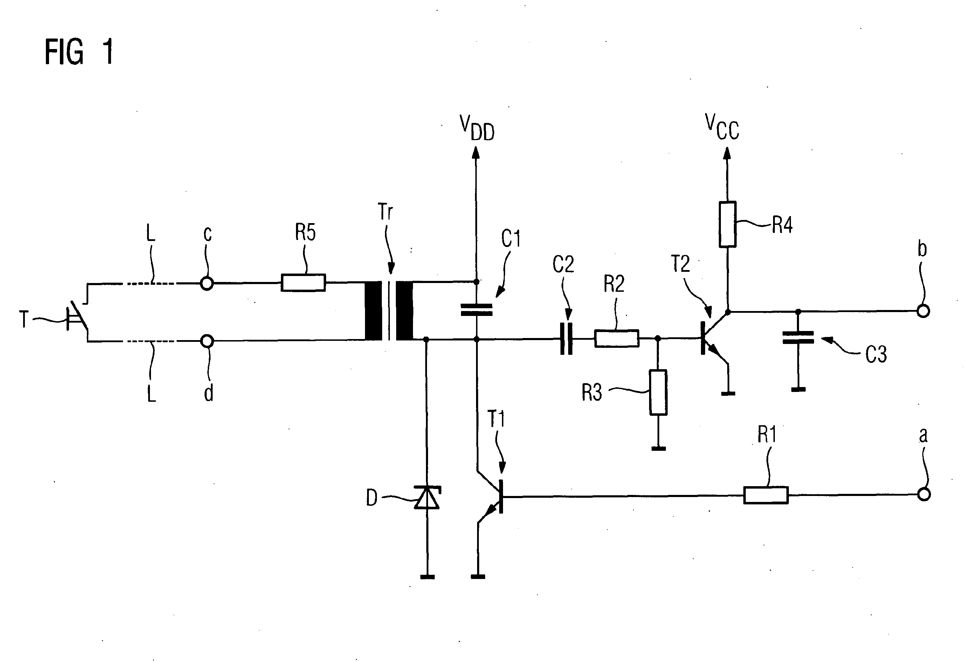

Eine erfindungsgemäße Auswerte-Schaltung ist in FIG 1 ohne Auswerte-Prozessor dargestellt. Die Basis eines Transistors T1 erhält vom Eingang a eine kontinuierliche Impulsfolge. Die Impulse sind schmal, einige µs, und kommen jeweils in einem Abstand von einigen ms. Die Primär-Induktivität eines Transformators Tr und die Kapazität eines Kondensators C1 bilden einen Niederfrequenz-Schwingkreis, der an den Kollektor des Transistors T1 angeschlossen ist. Ferner wird der Schwingkreis an einer Versorgungsspannung V_{DD} betrieben. Mit jedem Impuls am Eingang a wird der Schwingkreis angeregt. Die Impulsbreite wird der Eigenresonanz des Schwingkreises angepasst, so dass eine optimale Anregung stattfindet (z. B. ca. ¼ der Resonanzperiode).

Vorzugsweise sollte die Betriebsfrequenz des Schwingkreises, d. h. in der Regel die Eigenresonanzfrequenz von Tr und C1 etwas über der Hörschwelle des menschlichen Gehörs liegen, d. h. mindestens 15 kHz. Dadurch sind eventuell auftretende mechanische Schwingungen der Trafowicklungen nicht mehr hörbar (dieses Prinzip wird auch von Zeilenfrequenztrafos von Fernsehern angewendet).

Eine Zenerdiode D schützt den Transistor T1 gegen gelegentliche Überspannungen. Sie ist der Kollektor-Emitter-Strecke parallel geschaltet.

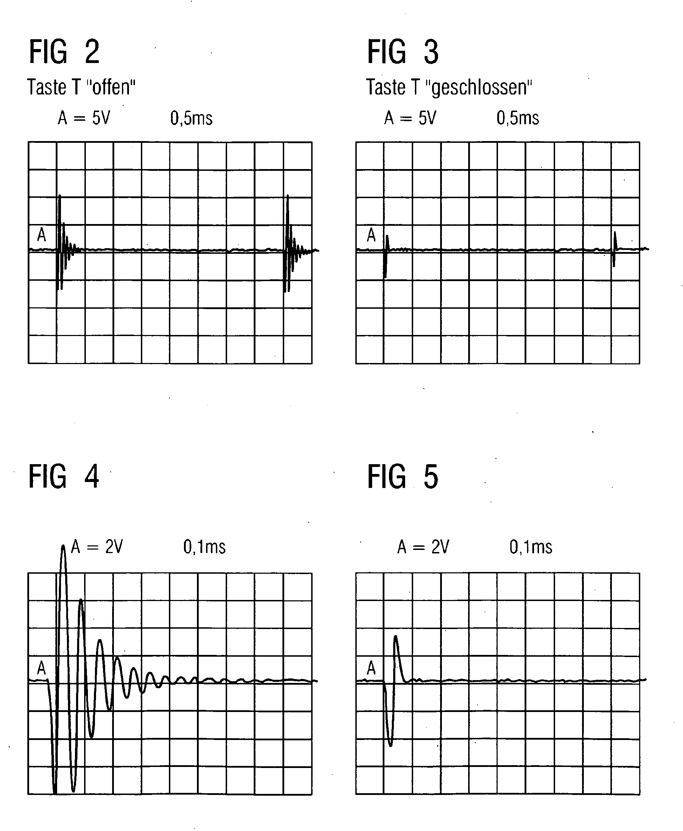

Nach einem anregenden Impuls entsteht als Antwort ein bedämpfter Schwingungszug von einigen Perioden, bis zum völligen Abklingen. Die Anzahl der Perioden hängt von der Güte des Schwingkreises ab (vgl. FIG 2).

An den Klemmen c und d der Sekundärspule des Transformators Tr kann über eine Leitung L ein Taster T angeschlossen werden. Ist der Taster T offen, so wirkt sich die Leitungskapazität (mit ca. 120 pF pro m) über die Transformatorfunktion ebenfalls auf die Resonanzfrequenz aus. Die Kapazität C1 im Schwingkreis sollte günstigerweise so groß gewählt werden, dass die Leitungskapazität auch für große Distanzen (z. B. 1000 m) nur unerheblich die Eigenresonanz verändert.

Zur Strombegrenzung ist ein niederohmiger Widerstand R5 an eine der Klemmen c, d geschaltet. Bei geschlossenem Taster T wird die Sekundärwicklung von Tr über diesen Widerstand R5 praktisch kurzgeschlossen. Dadurch wird der Schwingkreis sehr stark bedämpft, so dass im Primärkreis u. U. nur eine Periode und mit weitaus niedrigerer Amplitude erscheint, wie dies in FIG 3 dargestellt ist.

Das Maß der Dämpfung wird hier über die Amplitude der Schwingung erfasst. Über einen Kondensator C2 wird die Niederfrequenzspannung vom Schwingkreis ausgekoppelt. Ist die Amplitude hoch, so wird über einen Spannungsteiler bestehend aus den Widerständen R2 und R3 der Transistor T2 durchgeschaltet und entlädt mit jedem Impuls, der die Basis-Emittierschwelle überschreitet, einen Kondensator C3, bzw. hält ihn durch die Pulsfolge in entladenem Zustand. Wird nun der Taster T geschlossen, so sinkt die Amplitude unter die Basis-Emittierschwelle des Transistors T2. Der Kondensator C3 bleibt geladen.

Am Ausgang b, an dem die Spannung des Kondensators C3 abgreifbar ist, kann der Zustand des Kontaktes bzw. Tasters T abgefragt werden (z. B. mittels eines Prozessors).

Beim Drücken des Tasters T reagiert die Schaltung sehr schnell (C3 wird sofort entladen), beim Loslassen etwas verzögert, da C3 über R4 aufgeladen werden muss (es wirkt die Zeitkonstante). Dabei wird der Kondensator C3 von einer Spannung VCC geladen.

Um einen kostengünstigen Transformator mit Übertragungsverhältnis 1:1 einzusetzen, ist es vorteilhaft die Versorgungsspannung VDD relativ hoch anzusetzen (z. B. 12 V DC). Dadurch entstehen an der Tasterleitung höhere Spannungsamplituden (ca. 20 Vₛₛ durch Überschwingungen). Dies verbessert die Langzeit-Zuverlässigkeit von angeschlossenen 230 V-Installations-Tastern.

Die Oszillogramme in FIG 2 und FIG 3 stellen die Spannung am Schwingkreis der Schaltung aus FIG 1 dar. Dabei beträgt die Versorgungsspannung VDD = 12 V DC, der Anregungsimpuls hat eine Breite von 20 µs und die Pause zwischen den Impulsen ist 4 ms lang. Aus den vergrößerten Ausschnitten in den FIG 4 und 5 ist ohne weiteres zu erkennen, dass der Zustand der Taste T über die Periodenanzahl der gedämpften Schwingung ermittelbar ist.

Dabei wird beispielsweise anhand einer Spannungsschwelle die Präsenz einer Schwingung ermittelt. Läge beispielsweise diese Spannungsschwelle in der Höhe der ersten Hilfslinie über der Grundlinie von FIG 4, so würde die Auswerteschaltung drei Schwingungsperioden feststellen. Dies wäre ein eindeutiges Zeichen dafür, dass die Taste T offen ist. Wird hingegen bei diesem Schwellwert nur eine Schwingungsperiode festgestellt, wie dies in FIG 5 der Fall ist, so wird dies als Zeichen dafür gewertet, dass die Taste T geschlossen ist. Dies bedeutet, wie bereits erwähnt, dass die Auswertung des Signals des Schwingkreises nicht nur analog wie im Fall von FIG 1, sondern auch digital durch Zählen erfolgen kann.

Die Vorteile des erfindungsgemäßen Verfahrens für die Installationstechnik sind zahlreich. Da die Schaltung inklusive mit Einbezug der angeschlossenen Leitung (Leitungskapazität und Leitungsinduktivität) ein frei schwingendes, bedämpftes System im Niederfrequenzbereich bildet, ist die Spannung und der Strom über die Leitung jeweils ein Sinussignal mit relativ geringem Anteil an Harmonischen (mit Ausnahme des Anregungsmomentes). Dadurch ist die Funkstörspannung auf der Leitung gering und Sondermaßnahmen sind nicht nötig. Weitere Vorteile bestehen darin, dass große Leitungslängen (bis zu 1000 m) zwischen Schwingkreis und Taster bzw. Geber möglich sind und hohe Störsicherheit gegen Gleichtakt-Leitungseinkopplungen gegeben ist.

Durch die Wahl eines entsprechenden Puls-Pausenverhältnisses der Anregungsimpulsfolge kann ferner die zur Kontaktabfrage notwendige Energie minimiert werden. Außerdem kann bei Mehrfach-Binäreingängen kostengünstig eine Potentialtrennung zwischen den Kanälen sowie zur Hauptelektronik erreicht werden, indem der Schwingkreis mit einem isolierenden Transformator realisiert wird. Darüber hinaus ist durch eine relativ hohe momentane Schaltspannung für den Taster T beim Einschalten sowie relativ hohe Spitzenströme über dessen Kontakt die Langzeit-Funktionstüchtigkeit vor allem im Falle der Verwendung von 230 V-Installations-Tastern verbessert.

## Patentansprüche

1. Verfahren zum Ermitteln eines Zustands einer Gebereinrichtung (T) eines Installationssystems am proximalen Ende einer elektrischen Leitung (L), wobei die Gebereinrichtung (T) am distalen Ende der elektrischen Leitung (L) angeordnet ist, **gekennzeichnet durch**
- Dämpfen eines elektrischen Schwingkreises (Tr, C1) **durch** die Gebereinrichtung (T) am proximalen Ende der Leitung (L) und
- Gewinnen des Zustands der Gebereinrichtung (T) aus dem Maß der Dämpfung.

2. Verfahren nach Anspruch 1, wobei der Schwingkreis (Tr, C1) durch externe Impulse angeregt wird.

3. Verfahren nach Anspruch 1 oder 2, wobei der Schwingkreis (Tr, C1) durch einen Puls angeregt wird und derart bedämpft ist, dass die Schwingungsamplitude zwischen zwei Impulsen deutlich abnimmt .

4. Verfahren nach einem der vorhergehenden Ansprüche, wobei die Eigenresonanz des Schwingkreises (Tr, C1) mindestens 15 kHz beträgt.

5. Verfahren nach einem der vorhergehenden Ansprüche, wobei zum Gewinnen des Zustands der Gebereinrichtung (T) eine Periodenanzahl abklingender Schwingungen des Schwingkreises (Tr, C1) gezählt wird.

6. Verfahren nach einem der vorhergehenden Ansprüche, wobei der Schwingkreis (Tr, C1) über einen Transistor (T1) angeret wird und der Strom durch den Transistor (T1) für das Gewinnen des Zustands der Gebereinrichtung (T) herangezogen wird.

7. Verfahren nach einem der vorhergehenden Ansprüche, wobei die Amplitude der Schwingung anhand einer Spannungsschwelle durch einen weiteren Transistor (T2), einen Operationsverstärker oder einen Schmitt-Trigger ausgewertet wird.

8. Verfahren nach einem der vorhergehenden Ansprüche, wobei der Schwingkreis (Tr, C1) und eine Auswerteeinrichtung (C2, C3, R2, R3, R4, T2) mit der gleichen Versorgungsspannung betrieben werden.

9. Verfahren nach einem der vorhergehenden Ansprüche, wobei an dem proximalen Ende der Leitung (L) eine Potentialtrennung durchgeführt wird.

10. Vorrichtung zum Ermitteln eines Zustands einer Gebereinrichtung (T) eines Installationssystems am proximalen Ende einer elektrischen Leitung (L), wobei die Gebereinrichtung (T) am distalen Ende der elektrischen Leitung (L) angeordnet ist,
**gekennzeichnet durch**
- einen elektrischen Schwingkreis (Tr, C1), der an das proximale Ende der Leitung (L) angeschlossen ist und **dadurch** von der Gebereinrichtung (T) dämpfbar ist, und
- eine Auswerteeinrichtung (C2, C3, R2, R3, R4, T2) zum Auswerten eines Schwingungssignals des Schwingkreises (Tr, C1) und zum Gewinnen des Zustands der Gebereinrichtung (T) aus dem Maß der Dämpfung.

11. Vorrichtung nach Anspruch 10, wobei der Schwingkreis (Tr, C1) durch einen externen Impuls anregbar ist.

12. Vorrichtung nach Anspruch 10 oder 11, wobei der Schwingkreis (Tr, C1) durch einen Puls anregbar und derart dämpfbar ist, dass die Schwingungsamplitude zwischen zwei Impulsen deutlich abnimmt.

13. Vorrichtung nach einem der Ansprüche 10 bis 12, wobei die Eigenresonanz des Schwingkreises (Tr, C1) mindestens 15 kHz beträgt.

14. Vorrichtung nach einem der Ansprüche 10 bis 13, wobei die Auswerteeinrichtung (C2, C3, R2, R3, R4, T2) zum Zählen einer Periodenanzahl abklingender Schwingungen des Schwingkreises (Tr, C1) ausgelegt ist.

15. Vorrichtung nach einem der Ansprüche 10 bis 14, wobei der Schwingkreis (Tr, C1) über einen Transistor (T1) angesteuert ist und der Strom durch den Transistor (T1) von der Auswerteeinrichtung (C2, C3, R2, R3, R4, T2) auswertbar ist.

16. Vorrichtung nach einem der Ansprüche 10 bis 15, wobei die Auswerteeinrichtung (C2, C3, R2, R3, R4, T2) einen weiteren Transistor (T2), einen Operationsverstärker oder einen Schmitt-Trigger umfasst und die Amplitude der Schwingung anhand einer Spannungsschwelle auswertbar ist.

17. Vorrichtung nach einem der Ansprüche 10 bis 16, wobei die Gebereinrichtung (T) einen Schalter, einen Taster oder einen Sensor umfasst.

18. Vorrichtung nach einem der Ansprüche 10 bis 17, wobei der Schwingkreis (Tr, C1) und die Auswerteeinrichtung (C2, C3, R2, R3, R4, T2) mit der gleichen Versorgungsspannung betreibbar ist.

19. Vorrichtung nach einem der Ansprüche 10 bis 18, wobei am proximalen Ende der Leitung (L) eine Primärspule eines Transformators (Tr) angeschlossen ist und die Sekundärspule des Transformators (Tr) die Induktivität des Schwingkreises (Tr, C1) bildet.

20. Vorrichtung nach einem der Ansprüche 10 bis 19, wobei am proximalen Ende der Leitung (L) ein Kaltleiter angeschlossen ist.

## Claims

1. Method for determining a state of a sensor (T) of an installation system at the proximal end of an electrical line (L), with the sensor (T) being arranged at the distal end of the electrical line (L),
**characterised by**
- damping an electrical oscillating circuit (Tr, C1) by the sensor (T) at the proximal end of the line (L) and
- obtaining the state of the sensor (T) from the degree of the damping.

2. Method according to claim 1, with the oscillating circuit (Tr, C1) being excited by external pulses.

3. Method according to claim 1 or 2, with the oscillating circuit (Tr, C1) being excited by a pulse and being damped such that the oscillating amplitude significantly reduces between two pulses.

4. Method according to one of the preceding claims, with the natural resonance of the oscillating circuit (Tr, C1) amounting to at least 15 kHz.

5. Method according to one of the preceding claims, with a number of periods of oscillation ringing of the oscillating circuit (Tr, C1) being counted in order to obtain the state of the sensor (T).

6. Method according to one of the preceding claims, with the oscillating circuit (Tr, C1) being excited by way of a transistor (T1) and the current through the transistor (T1) being used to obtain the state of the sensor (T).

7. Method according to one of the preceding claims, with the amplitude of the oscillation being evaluated with the aid of a voltage threshold through a further transistor (T2), an operational amplifier and a Schmitt trigger.

8. Method according to one of the preceding claims, with the oscillating circuit (Tr, C1) and an evaluation device (C2, C3, R2, R3, R4, T2) being operated with the same supply voltage.

9. Method according to one of the preceding claims, with a potential separation being implemented at the proximal end of the line (L).

10. Device for determining a state of a sensor (T) of an installation system at the proximal end of an electrical line (L), with the sensor being arranged at the distal end of the electrical line (L), **characterised by**
- an electrical oscillating circuit (Tr, C1), which is connected at the proximal end of the line (L) and can as a result be damped by the sensor (T), and
- an evaluation device (C2, C3, R2, R3, R4, T2) for evaluating an oscillating signal of the oscillating circuit (Tr, C1) and obtaining the state of the sensor (T) from the degree of damping.

11. Device according to claim 10, with the oscillating circuit (Tr, C1) being excitable by an external pulse.

12. Device according to claim 10 or 11, with it being possible to excite and damp the oscillating circuit (Tr, C1) by means of a pulse such that the oscillating amplitude significantly reduces between two pulses.

13. Device according to one of claims 10 to 12, with the natural resonance of the oscillating circuit (Tr, C1) amounting to at least 15 kHz.

14. Device according to one of claims 10 to 13, with the evaluation device (C2, C3, R2, R3, R4, T2) being designed to count a number of periods of oscillating ringing of the oscillating circuit (Tr, C1).

15. Device according to one of claims 10 to 14, with the oscillating circuit (Tr, C1) being controlled by way of a transistor (T1) and the current through the transistor (T1) being evaluatable by the evaluation device (C2, C3, R2, R3, R4, T2).

16. Device according to one of claims 10 to 15, with the evaluation device (C2, C3, R2, R3, R4, T2) having an additional transistor (T2), an operational amplifier or a Schmitt trigger and the amplitude of the oscillation being evaluatable with the aid of a voltage threshold.

17. Device according to one of claims 10 to 16, with the sensor (T) having a switch, a pushbutton or a sensor.

18. Device according to one of claims 10 to 17, with the oscillating circuit (Tr, C1) and the evaluation device (C2, C3, R2, R3, R4, T2) being operable with the same supply voltage.

19. Device according to one of claims 10 to 18, with a primary coil of a transformer (Tr) being connected at the proximal end of the line (L) and the secondary coil of the transformer (Tr) forming the inductance of the oscillating circuit (Tr, C1).

20. Device according to one of claims 10 to 19, with a PTC resistor being connected at the proximal end of the line (L).

## Revendications

1. Procédé destiné à déterminer un état d'un dispositif transmetteur (T) d'un système d'installation à l'extrémité proximale d'une ligne électrique (L), le dispositif transmetteur (T) étant disposé sur l'extrémité distale de la ligne électrique (L),
**caractérisé par**
- l'atténuation d'un circuit oscillant électrique (Tr, C1) par le dispositif transmetteur (T) à l'extrémité proximale de la ligne (L) et
- par l'obtention de l'état du dispositif transmetteur (T) à partir de la mesure de l'atténuation.

2. Procédé selon la revendication 1, le circuit oscillant (Tr, C1) étant excité par des impulsions externes.

3. Procédé selon la revendication 1 ou 2, le circuit oscillant (Tr, C1) étant excité par une impulsion et étant atténué de manière à ce que l'amplitude d'oscillation entre deux impulsions diminue de manière distincte.

4. Procédé selon l'une quelconque des revendications précédentes, la résonance propre du circuit oscillant (Tr, C1) étant au moins de 15 kHz.

5. Procédé selon l'une quelconque des revendications précédentes, un nombre périodique d'oscillations décroissantes du circuit oscillant (Tr, C1) étant compté pour obtenir l'état du dispositif transmetteur (T).

6. Procédé selon l'une quelconque des revendications précédentes, le circuit oscillant (Tr, C1) étant excité par l'intermédiaire d'un transistor (T1) et le courant passant à travers le transistor (T1) étant pris en considération pour obtenir l'état du dispositif transmetteur (T).

7. Procédé selon l'une quelconque des revendications précédentes, l'amplitude de l'oscillation étant évaluée à l'aide d'un seuil de tension au moyen d'un transistor supplémentaire (T2), d'un amplificateur d'opération ou d'un trigger de Schmitt.

8. Procédé selon l'une quelconque des revendications précédentes, le circuit oscillant (Tr, C1) et un dispositif d'évaluation (C2, C3, R2, R3, R4, T2) fonctionnant avec la même tension d'alimentation.

9. Procédé selon l'une quelconque des revendications précédentes, une coupure de potentiel étant réalisée à l'extrémité proximale de la ligne (L).

10. Dispositif destiné à déterminer un état d'un dispositif transmetteur (T) d'un système d'installation à l'extrémité proximale d'une ligne électrique (L), le dispositif transmetteur (T) étant disposé sur l'extrémité distale de la ligne électrique (L),
**caractérisé par**
- un circuit oscillant électrique (Tr, C1) qui est raccordé à l'extrémité proximale de la ligne (L) et peut être ainsi atténué par le dispositif transmetteur (T), et
- par un dispositif d'évaluation (C2, C3, R2, R3, R4, T2) destiné à évaluer un signal d'oscillation du circuit oscillant (Tr, C1) et à obtenir l'état du dispositif transmetteur (T) à partir de la mesure de l'atténuation.

11. Dispositif selon la revendication 10, le circuit oscillant (Tr, C1) étant excitable par une impulsion externe.

12. Dispositif selon la revendication 10 ou 11, le circuit oscillant (Tr, C1) étant excitable par une impulsion et pouvant être atténué de manière à ce que l'amplitude d'oscillation entre deux impulsions diminue de manière distincte.

13. Dispositif selon l'une quelconque des revendications 10 à 12, la résonance propre du circuit oscillant (Tr, C1) étant au moins de 15 kHz.

14. Dispositif selon l'une quelconque des revendications 10 à 13, le dispositif d'évaluation (C2, C3, R2, R3, R4, T2) étant conçu pour compter un nombre périodique d'oscillations décroissantes du circuit oscillant (Tr, C1).

15. Dispositif selon l'une quelconque des revendications 10 à 14, le circuit oscillant étant excité par l'intermédiaire d'un transistor (T1) et le courant passant à travers le transistor (T1) pouvant être évalué par le dispositif d'évaluation (C2, C3, R2, R3, R4, T2).

16. Dispositif selon l'une quelconque des revendications 10 à 15, le dispositif d'évaluation (C2, C3, R2, R3, R4, T2) comprenant un transistor supplémentaire (T2), un amplificateur d'opération ou un trigger de Schmitt et l'amplitude de l'oscillation étant évaluable à l'aide d'un seuil de tension.

17. Dispositif selon l'une quelconque des revendications 10 à 16, le dispositif transmetteur (T) comprenant un commutateur, un bouton-poussoir ou un capteur.

18. Dispositif selon l'une quelconque des revendications 10 à 17, le circuit oscillant (Tr, C1) et le dispositif d'évaluation (C2, C3, R2, R3, R4, T2) pouvant fonctionner avec la même tension d'alimentation.

19. Dispositif selon l'une quelconque des revendications 10 à 18, une bobine primaire d'un transformateur (Tr) étant raccordée à l'extrémité proximale de la ligne (L) et la bobine secondaire du transformateur (Tr) formant l'inductance du circuit oscillant (Tr, C1).

20. Dispositif selon l'une quelconque des revendications 10 à 19, une résistance à coefficient de température positif étant raccordé à l'extrémité proximale de la ligne (L).
